# EUROPEAN PATENT APPLICATION

(11) **EP 3 739 730 A1**
(43) Date of publication of application: **18.11.2020**
(21) Application number: 20173929.9
(22) Date of filing: 11.05.2020
(51) Int. Cl.: H02K 7/00

(54) **METHOD AND APPARATUS FOR MECHANICALLY COUPLING A MOTOR TO AN ELECTRICALLY ISOLATED PUMP**

(30) Priority: 14.05.2019 US 201962847389 P; 24.04.2020 US 202016857725
(71) Applicant: Illinois Tool Works Inc., Glenview, IL 60025 (US)
(72) Inventor: BORNEMANN, Brian, Glenview, IL 60025 (US); HENRY, Andrew, Glenview, IL 60025 (US)
(74) Representative: HGF

(57) **Abstract**

Provided is an electrically isolated pump system that comprises welding-type power conversion circuitry configured to convert input power to welding-type power, a motor configured to output mechanical power using motor voltage derived from the input power by a motor power conversion circuitry, and an electrically insulating isolating coupler configured to transmit the mechanical power to a pump, where the motor is electrically isolated from the pump and the pump is configured to use the transmitted mechanical power to pump fluid.

## Description

### PRIORITY/CROSS REFERENCE TO RELATED APPLICATIONS

The present application claims the benefit of U.S. Provisional Patent Application Serial No. 62/847,389, filed May 14, 2019, entitled "Method and Apparatus for Mechanically Coupling a Motor to an Electrically Isolated Pump," the entire contents of which are expressly incorporated herein by reference.

### BACKGROUND

The present disclosure relates to a motor providing mechanical force to an electrically isolated pump that is configured to pump fluid for use in a welding system.

Limitations and disadvantages of conventional pump for use in cooling a welding system will become apparent to one of skill in the art, through comparison of such approaches with some aspects of the present method and system set forth in the remainder of this disclosure with reference to the drawings.

### SUMMARY

Methods and systems are provided for a method and apparatus for a motor providing mechanical force to a pump that is electrically isolated from the motor, substantially as illustrated by and described in connection with at least one of the figures, as set forth more completely in the claims.

### BRIEF DESCRIPTION OF THE DRAWINGS

These and/or other aspects will become apparent and more readily appreciated from the following description of some example embodiments, taken in conjunction with the accompanying drawings.
FIG. 1A is a high level block diagram of an example of power conversion circuitry, a motor, a pump, and a torch, in accordance with an embodiment of the disclosure.
FIG. 1B is a lower level block diagram of an example of a motor power conversion circuitry, a motor, and a pump, in accordance with an embodiment of the disclosure.
FIG. 2A is an exploded drawing of an example coupling system between an electric motor and a fluid pump where the motor and pump are electrically isolated and mechanically coupled in accordance with an embodiment of the disclosure.
FIG. 2B is a drawing of an example of an electric motor electrically isolated and mechanically coupled to a fluid pump in accordance with an embodiment of the disclosure.

The figures are not necessarily to scale. Where appropriate, similar or identical reference numbers are used to refer to similar or identical components.

### DETAILED DESCRIPTION

Some welding systems, such as, for example, higher amperage TIG machines, may offer the option of a water cooled TIG torch. In such systems, coolant is pumped into the torch assembly comprising the cable and torch body. The welding power source may provide appropriate electrical power to a motor to run a coolant pump. The motor/pumps that TIG coolers use may be, for example, a commodity or off-the-shelf item that may also be used in other devices than welding-type systems. Accordingly, these motors may only accept 120V/240 V single phase AC input voltage.

Therefore, it is advantageous to use these motors rather than special order other motors since there may be a long lead time to develop the custom motors, and the cost of the custom motors can be much more expensive than the commodity motors that are used in a variety of different fields. However, the motors may need to be electrically isolated from the pumps. The present disclosure provides descriptions for a mechanical coupling system that electrically isolates the motor from the pump.

While power and force are defined differently, since power and force are related, the term power may also be used to refer to force for the sake of simplicity.

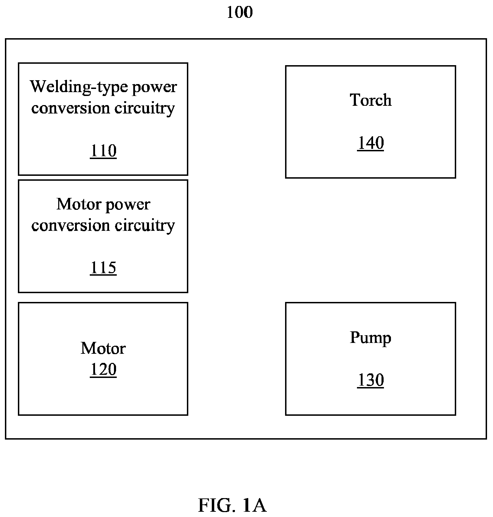

FIG. 1A is a high level block diagram of an example of power conversion circuitry, a motor, a pump, and a torch, in accordance with an embodiment of the disclosure. Referring to FIG. 1A, there is shown a portion of a welding system 100 that comprises a welding-type power conversion circuitry 110, a motor power conversion circuitry 115, a motor 120, a pump 130, and a welding torch 140. The power conversion circuitry 110 and 115 receive input power from, for example, a power source that may provide 120 VAC, 240VAC, 480 VAC, etc. The output power of the welding-type power conversion circuitry 110 may be provided to, for example, the welding torch 140. The output power of the motor power conversion circuitry 115 may be provided to, for example, the motor 120. For example, the output power of the motor power conversion circuitry 115 may include one or both of 120 VAC or 240 VAC where the appropriate output voltage is provided to the motor 120. The output power of the welding-type power conversion circuitry 110 may be referred to as welding-type power. The motor 120 may use the power from the motor power conversion circuitry 115 to generate mechanical force (torque) that may be provided to the pump 130 while electrically isolating the pump 130 from the output power of the motor power conversion circuitry 115. The pump 130 may then use the mechanical force to pump fluid through the pump 130 to cool, for example, the torch 140.

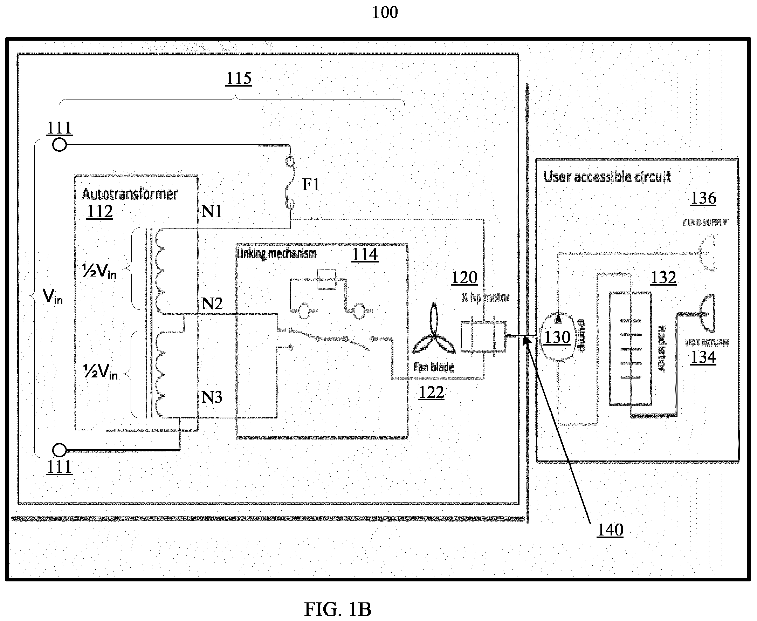

FIG. 1B is a lower level block diagram of an example of a motor power conversion circuitry, a motor, and a pump, in accordance with an embodiment of the disclosure. Referring to FIG. 1B, there are shown in more detail the motor power conversion circuitry 115, the motor 120, and the pump 130.

The motor power conversion circuitry 115 may comprise, for example, a fuse F1 to protect an input line, an autotransformer 112 for converting an input voltage of the input power to an output voltage of the output power of the motor power conversion circuitry 115, and a linking mechanism 114 for communicating the output power from the autotransformer 112 to the motor 120. The linking mechanism 114 may also be referred to as a switch module.

Although various autotransformers may have different number of nodes, the example autotransformer 112 comprise three nodes. The nodes N1 and N3 may be used for input power. The nodes N1 and N3 may also be used when the motor voltage is the same as the input voltage. When the motor voltage is half of the input voltage, the nodes N1 and N2 can be used. Accordingly, it can be seen that different needs for output power may use autotransformers with different number of nodes, where each node may tap the autotransformer at different points.

The motor 120 may also have a fan 122 to cool the motor 120 and the radiator 132. The pump 130 may be used with a radiator 132 where the input port 134 receives hot fluid from, for example, the TIG torch (torch 140 in FIG. 1) that is cooled by the fluid pumped by the pump 130. The fluid may be, for example, water. The hot fluid (e.g., hot water) is cooled by the radiator 132, and the cooled fluid (e.g., cooled water) is output via the output port 136.

While only three nodes are shown, various embodiments of the disclosure may show additional circuitry for different power output(s) as may be appropriate. For example, there may be additional circuitry for various output powers at different voltages for lights, etc.

Accordingly, the motor power conversion circuitry 115 may receive input power (line power) via the electrical conductors 111, and the output power(s) may be output via the electric nodes N1 and N2 or N1 and N3, where there may be other nodes for different usage. For example, when the work equipment 100 is a welding power source, one set of electrical nodes may be used for the pump 120 and another set of nodes may provide power for various appropriate device(s) such as, for example, lights provided for a user of the work equipment 100.

When the motor voltage is the same as the input voltage, the nodes N1 and N3 may provide the input voltage to the motor 120 as motor voltage. If there is no need to change the motor voltage, then, in some embodiments, the input voltage may be provided to the motor 120 without the need for the autotransformer 112. When the autotransformer 112 is not used, the linking mechanism 114 may also not be used.

Accordingly, the motor power conversion circuitry 115 may receive AC power and output AC power at a different voltage(s) and/or output DC power at one or more voltages. The specific circuitry used in the power conversion circuitry 110 may be design dependent.

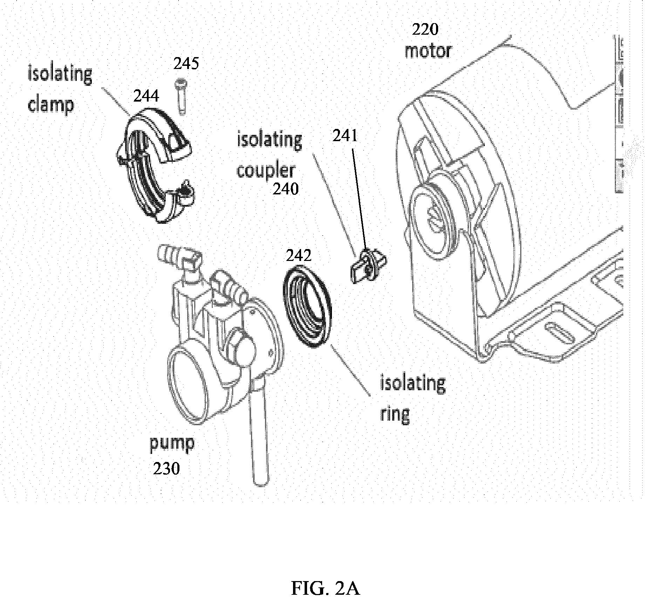

FIG. 2A is an exploded drawing of an example coupling system between an electric motor and a fluid pump where the motor and pump are electrically isolated and mechanically coupled in accordance with an embodiment of the disclosure. The example coupling system of FIG. 2A may be used to couple the motor and the pump in FIG. 1A. Referring to FIG. 2A, there are shown the motor 220 and the pump 230. There are further shown the isolating coupler 240, the isolating ring 242, and the isolating clamp 244 where these parts are made of electrically insulating material(s). The bolt 245 can be used to tighten the isolating clamp 244.

The isolating coupler 240 is used to transfer the mechanical force (torque) generated by the motor 220 to the pump 230. The isolating coupler 240 provides creepage and clearance between the motor 220 and the pump 230, and may comprise, for example, a flange 241 to increase creepage with respect to the isolating coupler 240 without the flange 241. Creepage and clearance may also be known as "over surface" and "through air" electrical spacings. Creepage and clearance for various voltages may be specified by various standards according to a jurisdiction.

The isolating ring 242 provides creepage and clearance between the motor 220 and the pump 230. As shown in FIG. 2A, in some embodiments, the isolating coupler 240 fits through the isolating ring 242.

The isolating clamp 244 is used to tightly couple the motor 220 and the pump 230 together to reduce rotation of the pump housing with respect to the motor housing so that the pump 230 does not move when it is provided the mechanical force. The isolating clamp 244 also provides clearance and creepage between the motor 220 and the pump 230.

Each of the isolating coupler 240, the isolating ring 242, and the isolating clamp 244 may contribute to at least a threshold amount of creepage and/or clearance needed between the motor 220 and the pump 230 for a given motor voltage used by the motor 220. The threshold amount of creepage and/or clearance may be determined according to, for example, standard(s) for an appropriate jurisdiction(s). The creepage and/or clearance of each of the isolating coupler 240, the isolating ring 242, and the isolating clamp 244 may be, for example, the threshold amount of creepage and/or clearance.

Some embodiments of the disclosure may have the isolating clamp 244 and the isolating ring 242 combined together as one part. Accordingly, the clearance and/or creepage may be increased with respect to the isolating clamp 244 that is not combined together with the isolating ring 242.

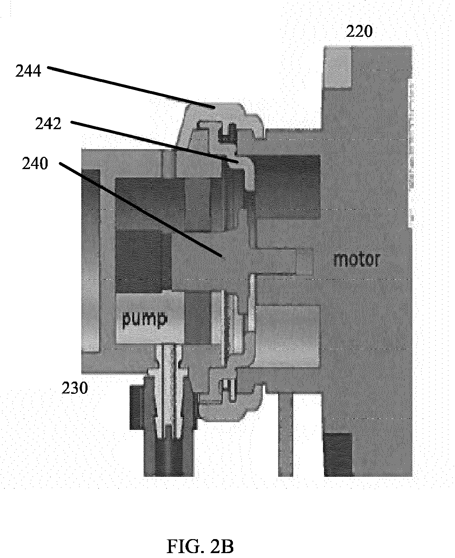

FIG. 2B is a drawing of an example of an electric motor electrically isolated and mechanically coupled to a fluid pump in accordance with an embodiment of the disclosure. FIG. 2B shows the motor 220 and the pump 230 coupled together using the isolating coupler 240, the isolating ring 242, and the isolating clamp 244. Accordingly, the pump 230 may be isolated from the motor voltage used by the motor 220 to generate the mechanical power provided to the pump 230.

Therefore, it can be seen that the disclosure provides for an electrically isolated pump system comprising welding-type power conversion circuitry configured to convert input power to welding-type power, a motor configured to output mechanical power using motor voltage derived from the input power by a motor power conversion circuitry, and an electrically insulating isolating coupler configured to transmit the mechanical power to a pump. The isolating coupler comprises a flange, such that the flange provides increased creepage with respect to the isolating coupler not comprising the flange.

The motor may be electrically isolated from the pump and the pump is configured to use the transmitted mechanical power to pump fluid. The pump system comprises an electrically insulating isolating ring configured to mechanically couple the motor to the pump and to electrically isolate the motor from the pump, where the isolating coupler is configured to go through the isolating ring. The isolating ring may be configured to provide at least a threshold clearance and a threshold creepage. Some embodiments may have the isolating clamp comprise an isolating ring.

The pump system may comprise an electrically insulating isolating clamp configured to secure the motor to the pump. The isolating clamp may provide at least a threshold clearance and a threshold creepage. The motor may use, for example, a motor voltage of 240 VAC.

The motor power conversion circuitry may be, for example, an autotransformer where the output voltage of the power conversion circuitry may be communicated to the motor as motor voltage. When the input voltage of the input power is greater than the motor voltage, the switch module may be configured to be connected to an output of the motor power conversion circuitry that outputs substantially the motor voltage. When the input voltage of the input power is substantially the motor voltage, the switch module may be configured to be connected to an output of the motor power conversion circuitry that outputs substantially the input voltage. When the input voltage of the input power is substantially equal to the motor voltage, the motor may be connected to the input voltage without use of the motor power conversion circuitry.

The present disclosure may also provide for a coupling system between an electric motor and a fluid pump, comprising an electrically insulating isolating coupler configured to transmit mechanical power output by the electric motor to the fluid pump; and an electrically insulating isolating clamp configured to secure the electric motor to the fluid pump. The coupling system may comprise an electrically insulating isolating ring configured to electrically isolate the electric motor from the pump, where the isolating coupler is configured to go through the isolating ring.

The isolating ring may be configured to provide at least a threshold clearance and a threshold creepage. The isolating clamp may comprise an electrically insulating isolating ring configured to electrically isolate the electric motor from the pump. The isolating clamp may also be configured to provide at least a threshold clearance and a threshold creepage. The isolating clamp may comprise a flange, such that the flange provides increased creepage with respect to the isolating coupler not comprising the flange.

The present disclosure may also provide for an electrically isolated pump system comprising a motor configured to use input voltage of input power to output mechanical power and an electrically insulating coupling system. The coupling system may comprise an electrically insulating isolating coupler configured to transmit the mechanical power to a pump, an electrically insulating isolating ring configured to electrically isolate the motor from the pump, where the isolating coupler is configured to go through the isolating ring, and an electrically insulating isolating clamp configured to secure the motor to the pump. The motor may be, for example, electrically isolated from the pump and the pump is configured to use the transmitted mechanical power to pump fluid.

As used herein, a welding-type power source refers to any device capable of using input power to supply power for welding, cladding, plasma cutting, induction heating, laser (including laser welding, laser hybrid, and laser cladding), carbon arc cutting, gouging, resistive preheating, and/or control circuitry, and control circuitry as well as ancillary circuitry associated therewith, where the device may be, but is not limited to autotransformers, transformers, transformer-rectifiers, inverters, converters, resonant power supplies, quasi-resonant power supplies, switch-mode power supplies, etc.

Some disclosed examples may describe electric currents being conducted "from" and/or "to" locations in circuits and/or power supplies. Similarly, some disclosed examples describe "providing" electric current via one or more paths, which may include one or more conductive or partially conductive elements. The terms "from," "to," and "providing," as used to describe conduction of electric current, do not necessitate the direction or polarity of the current. Instead, these electric currents may be conducted in either direction or have either polarity for a given circuit, even if an example current polarity or direction is provided or illustrated.

The term "power" is used throughout this specification for convenience, but also includes related measures such as energy, force, current, voltage, and enthalpy. For example, controlling "power" may involve controlling voltage, current, energy, and/or enthalpy, and/or controlling based on "power" may involve controlling based on voltage, current, energy, and/or enthalpy. Electric power of the kind measured in watts as the product of voltage and current (e.g., V*I power) may be referred to herein as "wattage."

As utilized herein, "and/or" means any one or more of the items in the list joined by "and/or." As an example, "x and/or y" means any element of the three-element set {(x), (y), (x, y)}. In other words, "x and/or y" means "one or both of x and y". As another example, "x, y, and/or z" means any element of the seven-element set {(x), (y), (z), (x, y), (x, z), (y, z), (x, y, z)}. In other words, "x, y and/or z" means "one or more of x, y and z". As utilized herein, the term "exemplary" means serving as a non-limiting example, instance, or illustration. As utilized herein, the terms "e.g." and "for example" set off lists of one or more non-limiting examples, instances, or illustrations. As utilized herein, circuitry is "operable" to perform a function whenever the circuitry comprises the necessary hardware and code (if any is necessary) to perform the function, regardless of whether performance of the function is disabled or not enabled (e.g., by a user-configurable setting, factory trim, etc.).

While the present method and/or system has been described with reference to certain implementations, it will be understood by those skilled in the art that various changes may be made and equivalents may be substituted without departing from the scope of the present method and/or system. In addition, many modifications may be made to adapt a particular situation or material to the teachings of the present disclosure without departing from its scope. Therefore, the present method and/or system are not limited to the particular implementations disclosed. Instead, the present method and/or system will include all implementations falling within the scope of the appended claims, both literally and under the doctrine of equivalents.

Certain implementations are described in the following numbered clauses:
Clause 1. An electrically isolated pump system, comprising:
   welding-type power conversion circuitry configured to convert input power to welding-type power;
   a motor configured to output mechanical power using motor voltage derived from the input power by a motor power conversion circuitry; and
   an electrically insulating isolating coupler configured to transmit the mechanical power to a pump,
   wherein the motor is electrically isolated from the pump and the pump is configured to use the transmitted mechanical power to pump fluid.
Clause 2. The system of clause 1, comprising an electrically insulating isolating ring configured to mechanically couple the motor to the pump and to electrically isolate the motor from the pump, wherein the isolating coupler is configured to go through the isolating ring.
Clause 3. The system of clause 2, wherein the isolating ring is configured to provide at least a threshold clearance and a threshold creepage.
Clause 4. The system of clause 1, comprising an electrically insulating isolating clamp configured to secure the motor to the pump.
Clause 5. The system of clause 4, wherein the isolating clamp comprises an isolating ring.
Clause 6. The system of clause 4, wherein the isolating clamp is configured to provide at least a threshold clearance and a threshold creepage.
Clause 7. The system of clause 1, wherein the motor uses a motor voltage that is substantially 240 volts AC.
Clause 8. The system of clause 1, wherein the motor power conversion circuitry is an autotransformer.
Clause 9. The system of clause 1, comprising a switch module to communicate the motor voltage from the motor power conversion circuitry to the motor.
Clause 10. The system of clause 9, wherein, when the input voltage of the input power is greater than the motor voltage, the switch module is configured to be connected to an output of the motor power conversion circuitry that outputs substantially the motor voltage.
Clause 11. The system of clause 9, wherein, when the input voltage of the input power is substantially the motor voltage, the switch module is configured to be connected to an output of the motor power conversion circuitry that outputs substantially the input voltage.
Clause 12. The system of clause 1, wherein, when the input voltage of the input power is substantially equal to the motor voltage, the motor is connected to the input voltage without use of the motor power conversion circuitry.
Clause 13. The system of clause 1, wherein the isolating coupler comprises a flange, such that the flange provides increased creepage with respect to the isolating coupler not comprising the flange.
Clause 14. A coupling system between an electric motor and a fluid pump, comprising:
   an electrically insulating isolating coupler configured to transmit mechanical power output by the electric motor to the fluid pump; and
   an electrically insulating isolating clamp configured to secure the electric motor to the fluid pump.
Clause 15. The system of clause 14, comprising an electrically insulating isolating ring configured to electrically isolate the electric motor from the pump, wherein the isolating coupler is configured to go through the isolating ring.
Clause 16. The system of clause 15, wherein the isolating ring is configured to provide at least a threshold clearance and a threshold creepage.
Clause 17. The system of clause 14, wherein the isolating clamp comprises an electrically insulating isolating ring configured to electrically isolate the electric motor from the pump.
Clause 18. The system of clause 14, wherein the isolating clamp is configured to provide at least a threshold clearance and a threshold creepage.
Clause 19. The system of clause 14, wherein the isolating coupler comprises a flange, such that the flange provides increased creepage with respect to the isolating coupler not comprising the flange.
Clause 20. An electrically isolated pump system, comprising:
   a motor configured to use input voltage of input power to output mechanical power; and
   an electrically insulating coupling system comprising:
      an electrically insulating isolating coupler configured to transmit the mechanical power to a pump;
      an electrically insulating isolating ring configured to electrically isolate the motor from the pump, wherein the isolating coupler is configured to go through the isolating ring; and
      an electrically insulating isolating clamp configured to secure the motor to the pump,
      wherein the motor is electrically isolated from the pump and the pump is configured to use the transmitted mechanical power to pump fluid.

## Claims

1. An electrically isolated pump system, comprising:
welding-type power conversion circuitry configured to convert input power to welding-type power;
a motor configured to output mechanical power using motor voltage derived from the input power by a motor power conversion circuitry; and
an electrically insulating isolating coupler configured to transmit the mechanical power to a pump,
wherein the motor is electrically isolated from the pump and the pump is configured to use the transmitted mechanical power to pump fluid.

2. The system of claim 1, comprising an electrically insulating isolating ring configured to mechanically couple the motor to the pump and to electrically isolate the motor from the pump, wherein the isolating coupler is configured to go through the isolating ring, wherein, optionally, the isolating ring is configured to provide at least a threshold clearance and a threshold creepage.

3. The system of claim 1, comprising an electrically insulating isolating clamp configured to secure the motor to the pump.

4. The system of claim 3, wherein the isolating clamp comprises an isolating ring.

5. The system of claim 3, wherein the isolating clamp is configured to provide at least a threshold clearance and a threshold creepage.

6. The system of claim 1, wherein the motor uses a motor voltage that is substantially 240 volts AC.

7. The system of claim 1, wherein the motor power conversion circuitry is an autotransformer.

8. The system of claim 1, comprising a switch module to communicate the motor voltage from the motor power conversion circuitry to the motor.

9. The system of claim 8, wherein:
when the input voltage of the input power is greater than the motor voltage, the switch module is configured to be connected to an output of the motor power conversion circuitry that outputs substantially the motor voltage; or
when the input voltage of the input power is substantially the motor voltage, the switch module is configured to be connected to an output of the motor power conversion circuitry that outputs substantially the input voltage.

10. The system of claim 1, wherein, when the input voltage of the input power is substantially equal to the motor voltage, the motor is connected to the input voltage without use of the motor power conversion circuitry.

11. The system of claim 1, wherein the isolating coupler comprises a flange, such that the flange provides increased creepage with respect to the isolating coupler not comprising the flange.

12. A coupling system between an electric motor and a fluid pump, comprising:
an electrically insulating isolating coupler configured to transmit mechanical power output by the electric motor to the fluid pump; and
an electrically insulating isolating clamp configured to secure the electric motor to the fluid pump.

13. The system of claim 12, comprising an electrically insulating isolating ring configured to electrically isolate the electric motor from the pump, wherein the isolating coupler is configured to go through the isolating ring, wherein, optionally, the isolating ring is configured to provide at least a threshold clearance and a threshold creepage.

14. The system of claim 12, wherein:
the isolating clamp comprises an electrically insulating isolating ring configured to electrically isolate the electric motor from the pump; or
the isolating clamp is configured to provide at least a threshold clearance and a threshold creepage; or
the isolating coupler comprises a flange, such that the flange provides increased creepage with respect to the isolating coupler not comprising the flange.

15. An electrically isolated pump system, comprising:
a motor configured to use input voltage of input power to output mechanical power; and
an electrically insulating coupling system comprising:
an electrically insulating isolating coupler configured to transmit the mechanical power to a pump;
an electrically insulating isolating ring configured to electrically isolate the motor from the pump, wherein the isolating coupler is configured to go through the isolating ring; and
an electrically insulating isolating clamp configured to secure the motor to the pump,
wherein the motor is electrically isolated from the pump and the pump is configured to use the transmitted mechanical power to pump fluid.
